(19) Europäisches Patentamt

European Patent Office

Office européen des brevets

(11) **EP 1 511 239 A2**

(12) **EUROPEAN PATENT APPLICATION**

(43) Date of publication:
02.03.2005 Bulletin 2005/09

(51) Int Cl.⁷: **H04L 12/56**, H04L 1/18

(21) Application number: **04019081.1**

(22) Date of filing: **11.08.2004**

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: **24.08.2003 US 481281 P**

(71) Applicant: **ASUSTeK Computer Inc.**
**Peitou, Taipei City (TW)**

(72) Inventor: **Jiang, Sam Shiaw-Shiang**
**Hsin-Chu City (TW)**

(74) Representative:
**TER MEER STEINMEISTER & PARTNER GbR**
**Patentanwälte,**
**Mauerkircherstrasse 45**
**81679 München (DE)**

(54) **Method of controlling a receiver and a transmitter in a wireless communication system to handle a transmission window size change procedure**

(57) A method of controlling a receiver and a transmitter to handle a transmission window size change procedure is disclosed. The method includes driving the receiver to deliver a control message having a window size parameter to the transmitter (100) for adjusting a transmission window size of the transmitter, and driving the transmitter to output an acknowledgement message to the receiver (106) and adjust the transmission window size according to the window size parameter when the transmitter receives the control message.

FIG. 3

## Description

Cross Reference To Related Applications

The application claims the benefit of U.S. Provisional Application No. 60/481,281, which was filed on 08/24/2003 and entitled "RETRANSMISSION OF TRANSMISSION WINDOW SIZE CHANGE COMMAND".

Background of Invention

1. Field of the Invention

The present invention relates to a method of setting a wireless communication system, and more specifically, to a method of handling a transmission window size change procedure in the wireless communication system.

2. Description of the Prior Art

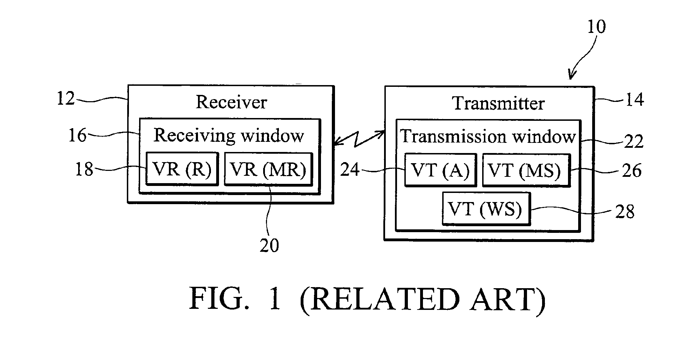

Please refer to Fig.1. Fig.1 is a simplified block diagram of a receiver 12 and a transmitter 14 in a prior art wireless communication system 10. Both the receiver 12 and the transmitter 14 have windows within which they expect to receive the PDUs and transmit the PDUs respectively. The receiver 12 has a receiving window 16 that is delimited by two state variables: VR(R) 18 and VR(MR) 20. VR(R) 18 marks the beginning of the receiving window 16, and VR(MR) 20 marks the end of the receiving window 16. The receiver 14 will only accept PDUs that have sequence numbers that are sequentially on or after VR(R) 18 and sequentially before VR(MR) 20. The sequence number value held in VR(MR) 20 is not considered to be within the receiving window 16. Similarly, the peer transmitter 14 has a transmission window 22 that is delimited by two state variables: VT (A) 24 and VT (MS) 26. VT(A) 24 marks the beginning of the transmission window 22, and VT(MS) 26 marks the end of the transmission window 22. The transmitter 14 will only transmit PDUs that have sequence numbers that are within the range of the transmission window 22, i.e., that are sequentially on or after VT (A) 24, and sequentially before VT(MS) 26.

The receiving window 16 has a receiving window size. The receiving window size is simply the number of sequence number values spanned by the state variables VR(R) 18 and VR (MR) 20. That is, VR(MR) 20 is always kept a fixed sequence number value distance away from VR(R) 18, which may be represented mathematically as:

$$VR(MR) = VR(R) + \text{receiving window size} \qquad (1)$$

Similarly, the transmission window 22 has a transmission window size state variable VT(WS) 28, which indicates the number of sequence number values spanned by the state variables VT(A) 24 and VT(MS) 26. The state variable VT(WS) 28 has an initial value that is set to a configured transmission window size, which is supplied by an upper layer. The relation among the state variables VT(MS) 26, VT(A) 24, and VT(WS) 28 may be represented mathematically as:

$$VT(MS) = VT(A) + VT(WS) \qquad (2)$$

As the receiver 12 receives PDUs from the transmitter 14, the receiver 12 will update the value of the state variable VR (R) 18 to reflect the sequentially earliest sequence number before which all preceding PDUs have been successfully received. Put another way, VR (R) 18 always holds the sequence number of the sequentially earliest PDU that the receiver 12 is waiting to receive. Upon the successful reception of this PDU, the receiver 12 advances the state variable VR(R) 18 to the sequence number value of the next PDU that needs to be received, and the state variable VR(MR) 20 is updated using equation (1) accordingly. In this manner, the receiving window 16 is advanced by the receiver 12 as the PDUs stream in from the transmitter 14.

The transmission window 22 is advanced when the transmitter 14 receives an acknowledgment status PDU from the receiver 12. The acknowledgment status PDU holds the most current value of the state variable VR(R) 18, and is sent at periodic intervals by the receiver 12, or in response to an explicit request from the transmitter 14. The acknowledgement status PDU may also indicate PDUs within the receiving window 16 that are known to have been missed (because, for example, sequentially later PDUs have already been received) and which must consequently be re-transmitted. The transmitter 14 will then set the state variable VT (A) 24 equal to the value held in the acknowledgment status PDU, which in effect sets VT (A) 24 equal to VR(R) 18. The transmitter 14 updates the state variable VT(MS) 26 using equation (2) accordingly. In this manner, the transmission window 22 and the receiving window 16 move forward with each other.

It is well-known that the receiver 12 is allowed to change the transmission window size of the corresponding transmitter

14. As specified in the 3GPP TS 25.322 V4.9.0 (2003-6) Radio Link Control (RLC) protocol specification, a STATUS PDU is used by the receiver 12 to inform the transmitter 14 about the size of the allowed transmission window 22. The receiver 12 is capable of delivering the STATUS PDU including a control message such as a window size super-field (WINDOW SUFI) to the transmitter 14 for setting the value of the state variable VT(WS) 28. The purpose of sending this WINDOW SUFI is to facilitate a flow control because of buffer memory size requirement.

According to the prior art, the receiver 12 keeps its receiving window size unchanged after the WINDOW SUFI is sent.

According to the prior art, the receiver 12 deems that the transmitter 14 can always receives the STATUS PDU 54 including the WINDOW SUFI 55 successfully. In other words, by the prior art, the transmission window change procedure terminates when the STATUS PDU 54 including the WINDOW SUFI 55 is sent out by the receiver 12. However, it is possible that the STATUS PDU 54 carrying the WINDOW SUFI 55 may not be correctly received by the transmitter 14 owing to the external interference over the air. If the STATUS PDU is lost during the wireless transmission, the receiver 12 cannot fulfill the flow control purpose of this WINDOW SUFI.

Concerning another condition, suppose that the missing WINDOW SUFI outputted from the receiver 12 is used to increase the size of the transmission window 22. As an example, this may happen when the transmission window size was first asked to shrink to a smaller size and then it is requested to stretch back to its original size. If the STATUS PDU is lost during the wireless transmission, the size of the receiving window 12 will be greater than the size of the unchanged transmission window 22. It is obvious that all PDUs transmitted from the transmitter 14 according to the transmission window 22 will be accepted by the receiver 12. However, because the transmission window 22 is not increased as requested by the receiver 12, the throughput and data rate will be degraded, and the receiving window 16, which reserves excessive buffers that will never be utilized, wastes the available memory capacity. In a extreme case that the previous transmission window size change (TWSC) procedure requested the transmission window size to zero to temporarily suspend the data transmission because of flow control consideration, if the restoring TWSC procedure to restore the transmission size to original one is lost over air interface, the transmitter 14 will not stop the suspension and a data transmission deadlock will occur.

Summary of Invention

It is therefore a primary objective of the claimed invention to provide a method of handling the transmission window size change (TWSC) procedure to solve problems invoked by the lost of the control message during the wireless transmission over the air.

Briefly summarized, a method for controlling a transmitter and a receiver in a wireless communication system to handle a TWSC procedure according to a preferred embodiment includes driving the receiver to deliver a control message having a window size parameter to the transmitter for adjusting a transmission window size of the transmitter, and when the transmitter receives the control message, driving the transmitter to output an acknowledgement message to the receiver and adjust the transmission window size according to the window size parameter.

According to a preferred embodiment, a method for controlling a transmitter and a receiver in a wireless communication system to handle a TWSC procedure includes driving the receiver to deliver a control message to the transmitter for adjusting a transmission window of the transmitter, and driving the receiver to adjust a receiving window size according to the window size parameter after a predetermined period of time, wherein the receiver discards a PDU having a sequence number outside the receiving window.

According to a preferred embodiment, a method for controlling a transmitter and a receiver in a wireless communication system to handle a TWSC procedure includes driving the receiver to deliver a control message having a window size parameter to the transmitter for reducing a transmission window size of the transmitter, driving the receiver to create an intended receiving window according to the window size parameter, and after a predetermined period of time, driving the receiver to retransmit the control message to the transmitter if the receiver receives a PDU having a sequence number outside the intended receiving window.

According to a preferred embodiment, a method for controlling a transmitter and a receiver in a wireless communication system to handle a TWSC procedure includes driving the receiver to deliver a control message to the transmitter for increasing a transmission window of the transmitter, driving the receiver to use a counter to count a number of transmission time intervals, called TTI hereafter, in which no new PDU allowed by the receiving window is received after a predetermined period of time, and driving the receiver to retransmit the control message to the transmitter if the TTI counter reaches a predetermined value.

The claimed method of controlling a transmitter and a receiver in a wireless communication system in a TWSC procedure utilizes the transmitter to output an acknowledgement message to the receiver when receiving a WINDOW SUFI. Therefore, the receiver is capable of determining if the WINDOW SUFI is correctly received by the transmitter. In addition, if the receiver outputs the WINDOW SUFI for reducing the size of the transmission window, the claimed method drives the receiver to detect if the received PDU having a sequence number outside the intended receiving window. To sum up, the claimed method solves the problem of invoked by the lost of the WINDOW SUFI during the wireless transmission over the air. The claimed method improves the radio transmission efficiency between the transmitter and the receiver, and optimizes the buffer memory usage of the receiver.

These and other objectives of the claimed invention will no doubt become obvious to those of ordinary skill in the art at reading the following detailed description of the preferred embodiments that are illustrated in the various figures and drawings.

Brief Description of Drawings

Fig.1 is a simplified block diagram of a receiver and a transmitter in a prior art wireless communication system.

Fig.2 is a simplified block diagram of a receiver and a transmitter in a wireless communication system according to the present invention.

Fig.3 is a flow chart illustrating a first embodiment of adjusting the transmission window according to the present invention.

Fig.4 is a flow chart illustrating a second embodiment of adjusting the transmission window according to the present invention.

Fig.5 is a flow chart illustrating a third embodiment of adjusting the transmission window according to the present invention.

Fig.6 is a flow chart illustrating a fourth embodiment of adjusting the transmission window according to the present invention.

Detailed Description

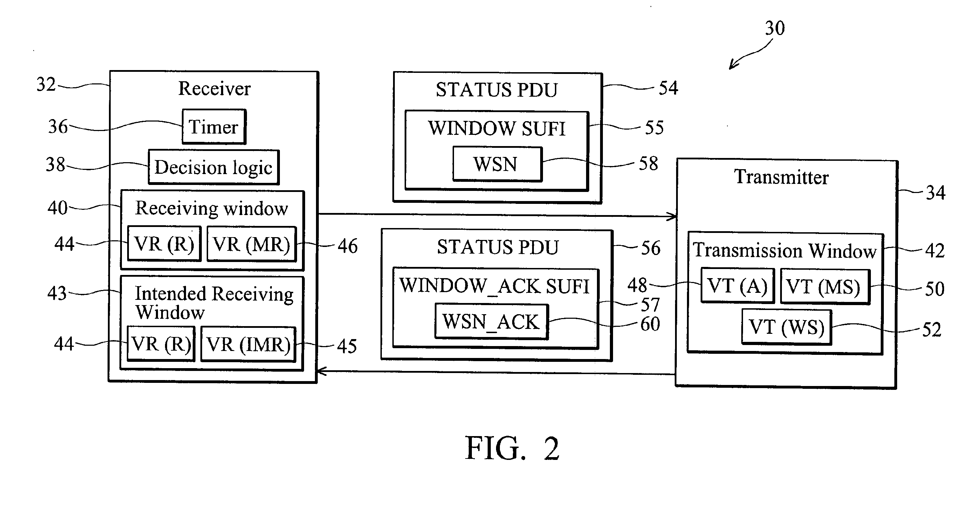

Please refer to Fig. 2. Fig. 2 is a simplified block diagram of a receiver 32 and a transmitter 34 in a wireless communication system 30 according to the present invention. The receiver 32 has a timer 36, a decision logic 38, and a receiving window 40. The transmitter 34 establishes a transmission window 42 corresponding to the receiving window 40. As mentioned above, the span of the receiving window 40 is controlled by two state variables VR(R) 44 and VR(MR) 46, and the span of the transmission window 42 is controlled by these state variables VT (A) 48 and VT (MS) 50. The size of the transmission window 42 is VT (WS) 52. The receiver 32 is allowed to initiate a transmission window size change (TWSC) procedure. As shown in Fig.2, the receiver 32 outputs a STATUS PDU 54 having a WINDOW SUFI 55 containing a WSN field 58 to the transmitter 34 for modifying the size of the transmission window 42. That is, the WINDOW SUFI 55 is used to modify the value of the state variable VT (WS) 52 to the value of the WSN field 58. Therefore, the corresponding state variable VT (MS) 50 is accordingly adjusted, and the state variables VT (A), VT (MS) are capable of defining a new span of the transmission window 42. In addition, two state variables VR (R) 44 and VR ( IMR) 45 can be used to indicate the span of an intended receiving window 43, where VR (IMR) 45 may be represented mathematically as:

$$VR(IMR) = VR(R) + WSN \qquad (3)$$

Equation (3) is similar to equation (1) except that the receiving window size is replaced by the intended receiving window size WSN 58.

In a preferred embodiment, the transmitter 34 gives a notice to the receiver 32 upon successfully receiving the STATUS PDU 54 having the WINDOW SUFI 55. For example, the transmitter 34 delivers a STATUS PDU 56 carrying an acknowledgement message (WINDOW_ACK SUFI) 57 to the receiver 32 after receiving the STATUS PDU 54. The receiver 32 is capable of determining whether the transmission window 42 is correctly adjusted through reading the WINDOW_ACK SUFI 57 carried by the received STATUS PDU 56. The WINDOW_ACK SUFI 57 can optionally contain a WSN_ACK field 60. The WSN_ACK field 60 is set according to the value of the WSN field 58. As an example, WSN_ACK field can be set equal to the value of the WSN field 58. When a new TWSC procedure is triggered before the previous TWSC procedure terminates, the Receiver 32 can utilize the WSN_ACK field to identify if the WINDOW_ACK SUFI corresponds to the newest updated WINDOW SUFI. When the receiver 32 detects that the transmission window 42 is correctly adjusted as desired, the receiver 32 terminates the TWSC procedure.

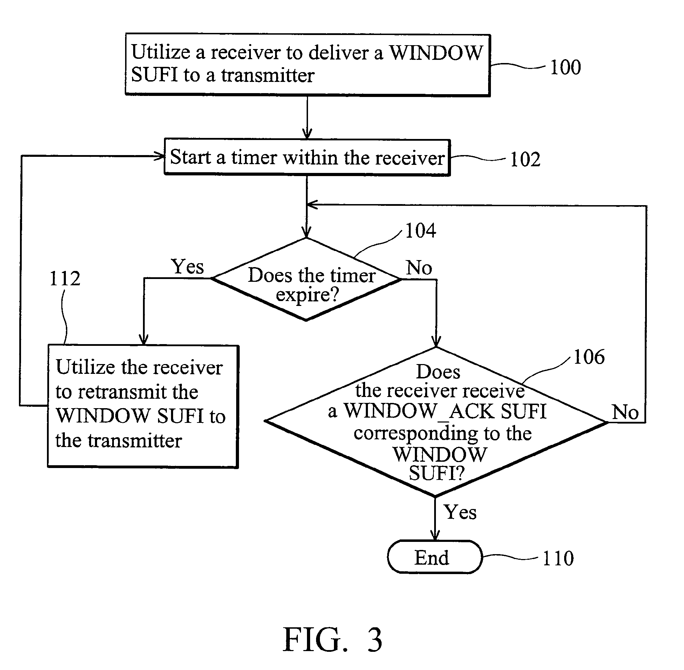

As mentioned before, the STATUS PDU 54 may get lost during the wireless transmission over the air. Therefore, the TWSC procedure according to the present invention detects the STATUS PDU 56 for confirming adjustment of the transmission window size 52. Please refer to Fig.3 in conjunction with Fig.2. Fig.3 is a flow chart illustrating a first embodiment of the TWSC procedure according to the present invention. The corresponding process is explained as follows. First, the receiver 32 initiates a TWSC procedure by delivering the STATUS PDU 54 having the WINDOW SUFI 55 to the transmitter 34 (step 100). After the STATUS PDU 54 is successfully outputted, the timer 36 positioned on the receiver 32 is triggered, and starts clocking (step 102). Then, check the timer 36 to see if the timer 36 expires (step 104). If the timer 36 does not expire, check the receiver 106 to see if it successfully receives the STATUS PDU 56 having a WINDOW_ACK SUFI 57 corresponding to the WINDOW SUFI (step 106). On the other hand, if the timer 36 expires, it is possible that the STATUS PDU 54 outputted from the receiver 32 gets lost during the wireless transmission. Therefore, the receiver 32 is driven to retransmit the same STATUS PDU 54 to the transmitter 34 (step 112). The timer 36 is restarted (step 102).

Concerning step 106, if the receiver 32 does not receive the STATUS PDU 56 that carries a WINDOW_ACK SUFI 57 corresponding to the WINDOW SUFI, the process of the present invention performs step 104 to check the expiration of the timer 36. On the other hand, if the receiver 32 receives the STATUS PDU 56 that carries a WINDOW_ACK SUFI 57 corresponding to the WINDOW SUFI (step 106), the receiver terminates the TWSC procedure (step 110).

In the preferred embodiment, the decision logic 38 is activated to make sure that the transmitter 34 really receives the accurate WINDOW SUFI 55 (step 106). As mentioned before, a new TWSC procedure may be triggered before the previous TWSC procedure terminates. The decision logic 38 of the receiver 32 compares the WSN 58 previously sent in the most updated WINDOW SUFI 55 with the WSN_ACK 60 lately received. If the two values match, the receiver 32 terminates the TWSC procedure (step 110). Otherwise, if WSN_ACK 60 is different from the most updated WSN 58, the received WINDOW_ACK SUFI 57 is out of date and the receiver 32 discards it and proceeds to step 104 again.

In addition, after the receiver terminates the TWSC procedure (step 110) when the WSN_ACK 60 matches the most updated WSN 58, the receiver 32 can optionally adjust its receiving window 40 accordingly (not shown in Fig. 3). In the preferred embodiment, the value of the state variable VR(MR) 46 is set to VR(R) 44 + WSN 58, wherein WSN 58 is the transmission window size requested by the receiver 32. In other words, PDUs with sequence numbers on or after VR(R) 44 + WSN 58 are considered to be outside the adjusted receiving window 40.

Please note that the period clocked by the timer 36 is defined to be greater than a roundtrip delay, i. e. the expected time between the transmission of the WINDOW SUFI 55 and the reception of a PDU (the STATUS PDU 56 for example) transmitted by the transmitter 34 after receiving the WINDOW SUFI 55.

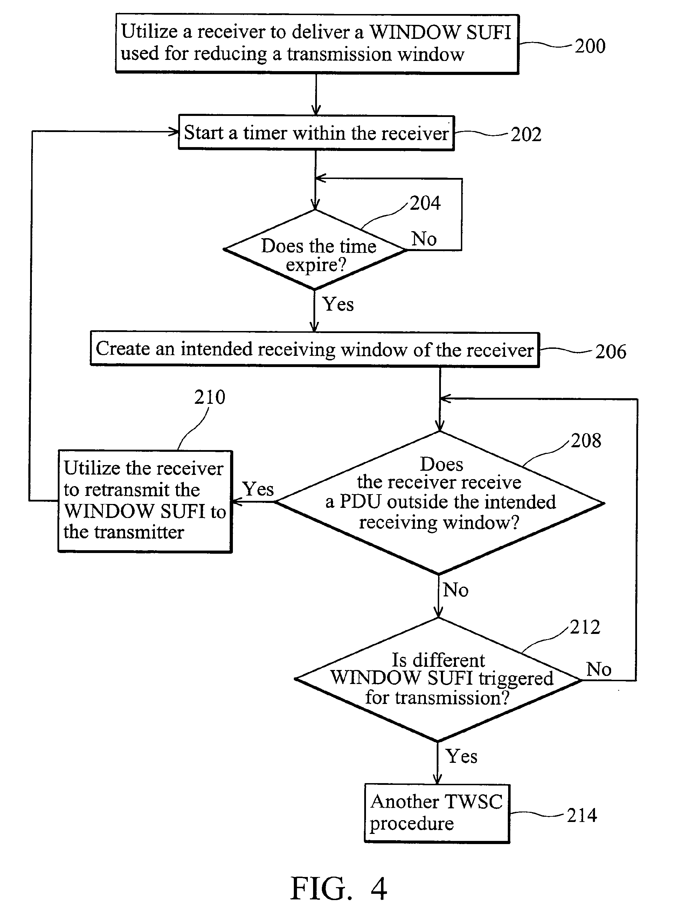

The above-mentioned first embodiment according to the present invention makes use of the acknowledge message (WINDOW_ACK SUFI) 57, generated from the transmitter 34 to determine if the WINDOW SUFI 55 is correctly received by the transmitter 34. However, other triggering mechanisms also can be used to achieve the same objective. Please refer to Fig. 2 in conjunction with Fig.4. Fig.4 is a flow chart illustrating a second embodiment of adjusting the transmission window 42 according to the present invention. Please note that the transmitter 34 in this preferred embodiment does not output the acknowledgement message (the WINDOW_ACK SUFI 57 shown in Fig.2) to the receiver 32 when receiving the STATUS PDU 54. The process corresponding to the second embodiment is suitable for the case of reducing transmission window size and is explained as follows. First, the receiver 32 is triggered to deliver the STATUS PDU 54 having the WINDOW SUFI 55 to the transmitter 34 for reducing the size of the transmission window 42 (step 200). After the STATUS PDU 54 is successfully outputted, the timer 36 positioned on the receiver 32 is triggered, and starts clocking (step 202). Please note that the duration of the timer 36 is defined to be greater than a roundtrip delay, i.e. the expected time between the transmission of the WINDOW SUFI 55 and the reception of a PDU transmitted by the transmitter 34 after receiving the WINDOW SUFI 55. Then, the timer 36 is checked to see if the timer 36 expires (step 204). When the timer 36 expires, the receiver 32 creates an intended receiving window 43 (step 206) delimited by VR(R) 44 and VR(IMR) 45, where VR (IMR) 45 is calculated from VT (R) 44 and WSN 58 in the lately sent WINDOW SUFI 55 using equation (3).

Then, the decision logic 38 is activated to detect if a PDU received from the transmitter 34 has a sequence number outside the intended receiving window 43. As mentioned above, the WSN 58 is used to reduce the transmission window 42 for the second embodiment. If the transmitter 34 does not correctly receive the STATUS PDU 54, the size of the transmission window 42 is not changed. However, the size of the intended receiving window 43 is equal to WSN 58 owing to step 206. In other words, the size VT (WS) 52 of the transmission window 42 is greater than the size of the intended receiving window 43 if the STATUS PDU 54 gets lost. Therefore, if the decision logic 38 detects that a PDU outputted from the transmitter 34 has a sequence number outside the intended receiving window 43 (step 208), the receiver 32 can deem that the transmitter 34 had not successfully received the WINDOW SUFI 55. Therefore, the receiver 32 is driven to retransmit the WINDOW SUFI 55 having the same WSN 58 to the transmitter 34 (step 210). The receiver constantly checks if there is different WINDOW SUFI triggered for transmission to adjust the size of transmission window to another value (step 212). If this happens, the receiver terminates the current TWSC procedure and starts another TWSC procedure (step 214).

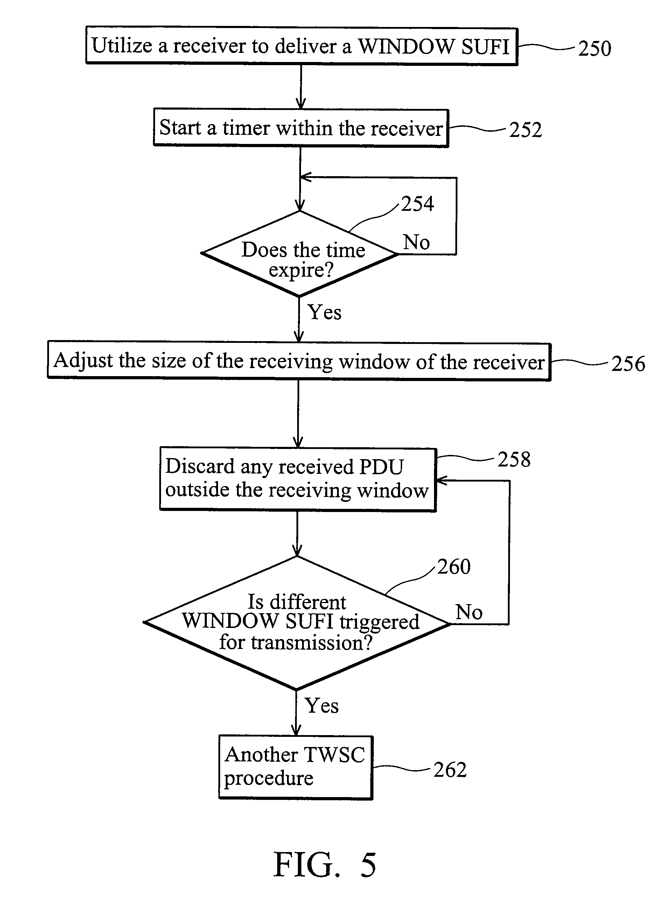

In the above second preferred embodiment, the receiver 32 creates an intended receiving window 43 while the size of the receiving window 40 is kept unchanged. A further embodiment of the present invention is to adjust the receiving window size accordingly. Please refer to Fig.2 in conjunction with Fig.5. Fig.5 is a flow chart illustrating a third embodiment of the TWSC procedure according to the present invention. The process corresponding to the third embodiment is explained as follows. First, the receiver 32 is triggered to deliver the STATUS PDU 54 having the WINDOW SUFI 55 to the transmitter 34 for changing the size of the transmission window 42 (step 250). After the STATUS PDU 54 is successfully outputted, the timer 36 positioned on the receiver 32 is triggered, and starts clocking (step 252). As before, the duration of the timer 36 is defined to be greater than a roundtrip delay, i.e. the expected time between the transmission of the WINDOW SUFI 55 and the reception of a PDU transmitted by the transmitter 34 after receiving the WINDOW SUFI 55. Then, the timer 36 is checked to see if the timer 36 expires (step 254). When the timer 36 expires, the receiver 32 adjusts the size of the receiving window (step 256) by setting VR (MR) 46 to VR(R) 44 + WSN 58, wherein WSN 58 stands for the new transmission window size requested by the receiver 32. Therefore, PDUs with sequence numbers on and after VR(R)+ WSN are considered to be outside the adjusted receiving window 40. In other words, any received PDU having a sequence number outside the receiving window 40 is discarded by the receiver 32 (step 258). The receiver 32 constantly checks if there is different WINDOW SUFI triggered for transmission to adjust the size of transmission window 42 to another value (step 260). If this happens, the receiver 32 terminates the current TWSC procedure and starts another TWSC procedure (step 262).

The above-mentioned second embodiment according to the present invention detects PDUs having sequence numbers outside the intended receiving window 40 to determine if the WINDOW SUFI 55 used for reducing the size of the transmission window 42 is correctly received by the transmitter 34. However, the receiver 32 is also capable of requesting the transmitter 34 to enlarge its transmission window 42. This may happen when the transmission window size was first asked to shrink to a smaller size and then it is requested to stretch back to its original size. The above first and third embodiments apply for both shrinking and stretching transmission window size cases.

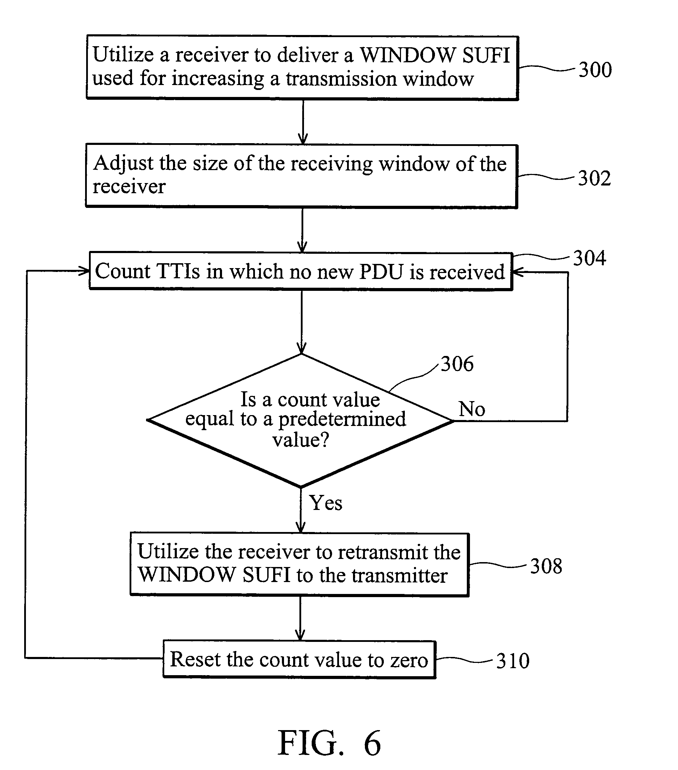

There is a further embodiment applying for the stretching transmission window size case. Please refer to Fig.2 in conjunction with Fig.6. Fig.6 is a flow chart illustrating a fourth embodiment of a TWSC procedure according to the present invention. Please note that the transmitter 34 in this preferred embodiment does not output the acknowledgement message (the WINDOW_ACK 57 shown in Fig.2) to the receiver 32 when receiving the STATUS PDU 54. The process corresponding to the fourth embodiment is explained as follows. First, the receiver 32 is triggered to deliver a STATUS PDU 54 having a WINDOW SUFI 55 to the transmitter 34 for increasing the current size of the transmission window 42 (step 300). Then, the receiver 32 is driven to adjust the size of its receiving window 40 to be at least the WSN 58 recorded by the outputted WINDOW SUFI 54 (step 302). The WSN 58 is used to enlarge the current size 52 of the transmission window 42. If the STATUS PDU 54 is not successfully received by the transmitter 34, the size 52 of the transmission window 42 is not changed, and the adjusted size of the receiving window 40 becomes greater than the currently maintained size of the transmission window 42.

After the transmitter 34 transfers all of the PDUs having sequence numbers within the transmission window 42 to the receiver 32, the transmitter 34 stops outputting PDUs having sequence numbers outside the transmission window 42 until the receiver 32 returns STATUS PDUs acknowledging successfully received data PDUs so that the transmitter can move forward the transmission window 42. Therefore, during a plurality of transmission time intervals (TTIs), the receiver 32 receives no new PDU with sequence number in the receiving window. The decision logic 38 is enabled to count the TTIs for computing a corresponding count value (step 304), and detects if the count value is equal to a predetermined value (step 306). In this preferred embodiment, the count value is calculated according to the TTIs in which no new PDU allowed in the receiving window is received. For example, each of the TTIs is counted to compute the count value. In addition, each group of the contiguous TTIs is capable of being used to compute the count value. That is, each group of the contiguous TTIs when no new PDU allowed in the receiving window is received is counted as one when computing the count value. When a new PDU allowed in the receiving window is received, the count value is reset to zero. When the count value equals the predetermined value, the receiver 32 deems that the size of the receiving window 40 is greater than the size of the transmission window 42. In other words, the receiver 32 believes that the transmitter 34 does not correctly receive the previously sent WINDOW SUFI 55. Therefore, the receiver 32 retransmits the WINDOW SUFI 55 having the same WSN 58 to the transmitter 34 for enlarging the transmission window 42 (step 308) and the count value is reset to zero (step 310).

It is possible that the size of the transmission window 42 has been correctly set, but the count value still equals the predetermined value. For example, suppose that the size of the transmission window 42 is correctly adjusted. The transmitter 34 has transferred all PDUs having sequence numbers within the transmission window 42 to the receiver 32, and utilizes a polling function to request information of the receiver 32. However, the corresponding STATUS PDUs outputted from the receiver 32 may get lost during the wireless transmission. Therefore, the transmission window 42 is not moved, and the count value is continuously computed. Once the count value equals the predetermined value, the same WINDOW SUFI 55 is transmitted again to define the size of the transmission window 42 that has been correctly set. In this preferred embodiment, the number of transmissions of the same WINDOW SUFI 55 is limited to a certain number to solve this problem.

In contrast to the prior art, the transmitter according to the present invention is controlled to output an acknowledgement message to the receiver when receiving a WINDOW SUFI. Therefore, the receiver is capable of determining if the WINDOW SUFI is correctly received by the transmitter. If the acknowledgement message is not received within a pre-determined time bound, the receiver retransmits the same WINDOW SUFI. In addition, if the receiver outputs the WINDOW SUFI for reducing the size of the transmission window, the receiver according to the present invention is capable of detecting if the received PDU having a sequence number outside the intended receiving window. If the receiver receives any PDU with a sequence number outside the intended receiving window, the receiver retransmits the same WINDOW SUFI. Concerning another embodiment, whether the WINDOW SUFI is to reduce or increase the transmission window size, the receiving window is adjusted accordingly after a pre-determined time bound so that any received PDU outside the adjusted receiving window is discard to fulfill the flow control or buffer size control purpose of the TWSC procedure.

To sum up, the claimed method solves the problem invoked by the lost of the WINDOW SUFI 55 during the wireless transmission over the air. The claimed method improves the radio transmission efficiency between the transmitter and the receiver, and optimizes the buffer memory usage of the receiver.

Those skilled in the art will readily observe that numerous modifications and alterations of the device may be made while retaining the teachings of the invention. Accordingly, the above disclosure should be construed as limited only by the metes and bounds of the appended claims.

**Claims**

1. A method for controlling a transmitter and a receiver in a wireless communication system to handle a transmission window size change procedure comprising following steps:

   (a) driving the receiver to deliver a control message having a window size parameter to the transmitter for adjusting a transmission window size of the transmitter; and
   (b) when the transmitter receives the control message, driving the transmitter to output an acknowledgement message to the receiver and adjust the transmission window size according to the window size parameter.

2. The method of claim 1 further comprising driving the receiver to retransmit the control message to the transmitter if the receiver does not receive the acknowledgement message within a predetermined period of time.

3. The method of claim 2 wherein step (a) further comprising driving the receiver to clock the predetermined period of time when the control message is outputted.

4. The method of claim 2 wherein the predetermined period of time is set to be larger than or equal to the roundtrip transmission delay between the receiver and the transmitter.

5. The method of claim 1 wherein step (b) further comprises driving the transmitter to add a window size acknowledgement parameter to the acknowledgement message, wherein the window size acknowledgement parameter corresponds to the window size parameter used in step (b).

6. The method of claim 5 further comprises the step of:

   the window size acknowledgement parameter is set equal to the window size parameter.

7. The method of claim 5 further comprises driving the receiver to check a value of the window size acknowledgement parameter carried by the acknowledgement message for determining if the acknowledgement message corresponds to the control message, and driving the receiver to discard the acknowledgement message from the transmitter if the window size acknowledgement parameter carried by the acknowledgement message does not match the window size parameter carried by the control message.

8. The method of claim 1 further comprises driving the receiver to adjust a receiving window of the receiver according to the window size parameter when the receiver receives the < acknowledgement message.

9. The method of claim 8 wherein when the receiver receives a PDU having a sequence number outside the receiving window, the receiver discards the PDU.

10. A method for controlling a transmitter and a receiver in a wireless communication system to handle a transmission window size change procedure comprising following steps:

    (a) driving the receiver to deliver a control message to the transmitter for adjusting a transmission window size of the transmitter; and
    (b) driving the receiver to adjust a receiving window size according to the window size parameter after a predetermined period of time, wherein the receiver discards a PDU having a sequence number outside the receiving window.

11. The method of claim 10 wherein step (a) further comprising driving the receiver to clock the predetermined period of time when the control message is outputted.

12. The method of claim 10 wherein the predetermined period of time is set to be larger than or equal to the roundtrip transmission delay between the receiver and the transmitter.

13. A method for controlling a transmitter and a receiver in a wireless communication system to handle a transmission window size change procedure comprising following steps:

(a) driving the receiver to deliver a control message having a window size parameter to the transmitter for reducing a transmission window size of the transmitter;

(b) driving the receiver to generate an intended receiving window according to the window size parameter; and

(c) after a predetermined period of time, driving the receiver to retransmit the control message to the transmitter if the receiver receives a PDU having a sequence number outside the intended receiving window.

**14.** The method of claim 13 wherein step (a) further comprising driving the receiver to clock the predetermined period of time when the control message is outputted.

**15.** The method of claim 13 wherein the predetermined period of time is set to be larger than or equal to the roundtrip transmission delay between the receiver and the transmitter.

**16.** A method for controlling a transmitter and a receiver in a wireless communication system to handle a transmission window size change procedure comprising following steps:

(a) driving the receiver to deliver a control message to the transmitter for increasing a transmission window of the transmitter;

(b) driving the receiver to use a TTI counter to count a number of transmission time intervals, called TTI hereafter, in which no new PDU allowed by the receiving window is received after a predetermined period of time; and

(c) driving the receiver to retransmit the control message to the transmitter and reset the TTI counter to a value of zero if the TTI counter reaches a predetermined value.

**17.** The method of claim 16 wherein step (b) further comprises driving the receiver to count each group of the contiguous TTIs in which no new PDU allowed in the receiving window is received as one.

**18.** The method of claim 16 further comprising blocking the receiver from retransmitting the control message after the same control message has been retransmitted for a predetermined number of times.

EP 1 511 239 A2

FIG. 1 (RELATED ART)

FIG. 2

Utilize a receiver to deliver a WINDOW SUFI to a transmitter — 100

Start a timer within the receiver — 102

104

Does the timer expire?

Yes — 112

No

Utilize the receiver to retransmit the WINDOW SUFI to the transmitter

106

Does the receiver receive a WINDOW_ACK SUFI corresponding to the WINDOW SUFI?

No

Yes

End — 110

FIG. 3

Utilize a receiver to deliver a WINDOW SUFI
used for reducing a transmission window — 200

Start a timer within the receiver — 202

204

Does the time
expire? — No

Yes

Create an intended receiving window of the receiver — 206

210

Utilize the receiver
to retransmit the
WINDOW SUFI to
the transmitter — Yes

Does
the receiver receive
a PDU outside the intended
receiving window? — 208

No

Is different
WINDOW SUFI triggered
for transmission? — No — 212

Yes

Another TWSC
procedure — 214

FIG. 4

Utilize a receiver to deliver a WINDOW SUFI — 250

Start a timer within the receiver — 252

254

Does the time expire? — No

Yes

Adjust the size of the receiving window of the receiver — 256

Discard any received PDU outside the receiving window — 258

260

Is different WINDOW SUFI triggered for transmission? — No

Yes

Another TWSC procedure — 262

FIG. 5

Utilize a receiver to deliver a WINDOW SUFI used for increasing a transmission window ——300

Adjust the size of the receiving window of the receiver ——302

Count TTIs in which no new PDU is received ——304

Is a count value equal to a predetermined value? —306

No

Yes

Utilize the receiver to retransmit the WINDOW SUFI to the transmitter ——308

Reset the count value to zero ——310

FIG. 6